# EUROPÄISCHE PATENTANMELDUNG

(11) **EP 2 796 233 A1**
(43) Veröffentlichungstag der Anmeldung: **29.10.2014**
(21) Anmeldenummer: 13165134.1
(22) Anmeldetag: 24.04.2013
(51) Int. Cl.: B23B 31/175, B23B 31/28

(54) **Koppelvorrichtung**

(71) Anmelder: Hiestand, Karl, 88630 Pfullendorf (DE)
(72) Erfinder: Hiestand, Karl, 88630 Pfullendorf (DE); Hiestand, Markus, 88630 Pfullendorf (DE)
(74) Vertreter: Engelhardt & Engelhardt

(57) **Zusammenfassung**

Die Vorrichtung umfasst: zwei gegeneinander verdrehbar angeordneter Bauteile (202 und 203); ein Antriebsglied 261; und ein axial verstellbares Koppelglied (204); wobei das Bauteil (203) an dem Antriebsglied (261) mittels des axial verstellbaren Koppelgliedes (204) wechselseitig verbindbar ist; wobei das Koppelglied (204) mit dem Antriebsglied (261) drehfest verbunden ist, wobei die beiden Bauteile unmittelbar miteinander verriegelbar sind und wobei die Verriegelung der beiden Bauteile durch eine Axialverschiebung des Koppelgliedes (204) lösbar ist. Alternativ ist vorgesehen, dass das Koppelglied (32) mit dem Bauteil (23) drehfest verbunden ist, wobei die beiden Bauteile über das Koppelglied (32) miteinander verriegelbar sind und wobei die Verriegelung der beiden Bauteile durch eine Axialverschiebung des Koppelgliedes (32) lösbar ist.

## Beschreibung

Die Erfindung bezieht sich auf eine Vorrichtung zur wechselseitigen Verbindung zweier gegeneinander verdrehbar angeordneter Bauteile an ein Antriebsglied mittels eines axial verstellbaren Koppelgliedes, insbesondere zur Verbindung eines Antriebsgliedes einer elektrischen Spanneinrichtung mit dieser, durch die die rotatorischen Verstellbewegungen des Antriebsgliedes in axiale Verstellbewegungen umwandelbar sind.

Durch die EP 2384839 B 1 ist es bei einer elektrischen Spanneinrichtung für Werkzeugmaschinen zu Umsetzung der Verstellbewegungen der Rotorwelle eines Servomotors in die zur Betätigung der Spannbacken eines Kraftspannfutters ertorderlichen axialen Verstellbewegungen einer Zugstange vorgesehen, in Spannstellung der Spanneinrichtung den Servomotor mittels einer gesteuert verschiebbaren Schiebemuffe über Zwischenglieder und Verzahnungen mit einem Bewegungswandler zu verbinden. In Betriebsstellung dagegen ist der Servomotor über die Schiebemuffe entkoppelbar.

Diese Ausgestaltung hat sich zwar bewährt, in der Praxis hat sich jedoch gezeigt, dass das Ankoppeln der Schiebemuffe an das mit dem Antriebsmotor verbundene Antriebsglied nicht ohne weiteres möglich ist. Die Schiebemuffe, die ständig mit dem Bewegungswandler verbunden ist und somit in Betriebsstellung mit umläuft, kann nämlich nur mit dem Antriebsglied gekoppelt werden, wenn dieses mit gleicher oder nahezu gleicher Drehzahl wie die Schiebemuffe angetrieben wird oder die zu verbindenden Bauteile stillgesetzt sind. Ein Ankoppeln erfordert somit einen außerordentlich großen Aufwand, um die zu verbindenden Bauteile zu synchronisieren und bei Gleichlauf die Schiebemuffe in die Verzahnung des Antriebsgliedes einrücken zu können. Trotz des somit erheblichen Steuerungsaufwandes sind dennoch Differenzzahlen zwischen dem mit dem Servomotor verbundenen Antriebsglied unvermeidbar, und die an der Schiebemuffe angebrachte Verzahnung stößt oftmals auf die Verzahnung des Antriebsgliedes, so dass ein Einrücken nicht oder nur teilweise möglich ist. Dies führt zu Verklemmungen und auch Blockierungen, Betriebsstörungen, die eine Unterbrechung des Arbeitsablaufes bedingen, sind demnach oftmals nicht vermeidbar.

Aufgabe der Erfindung ist es daher, eine Vorrichtung zur wechselseitigen Verbindung zweier Bauteile mit einem Antriebsglied zu schaffen, die äußerst einfach in ihrer konstruktiven Ausgestaltung ist, die es aber dennoch ermöglicht, ohne besondere Synchronisation eines mit dem Antriebsglied zu verbindenden Bauteils dieses jederzeit selbst über Verzahnungen mit diesem zu verbinden. Eine besondere Steuerung der Drehzahl des Antriebsgliedes soll somit nicht erforderlich sein, vielmehr soll gewährleistet sein, dass die zu verbindenden Verzahnungen stets vollständig ineinander greifen, so dass eine exakte Kraftübertragung sichergestellt und Betriebsstörungen und dadurch bedingte Betriebsunterbrechungen nicht in Kauf zu nehmen sind. Auch soll es möglich sein, das Koppelglied von den beiden Bauteilen zu lösen und unabhängig von diesen zusammen mit dem Antriebsglied umlaufen zu lassen.

Gemäß der Erfindung wird dies bei einer Vorrichtung der vorgenannten Gattung dadurch erreicht, dass das Koppelglied mit dem Antriebsglied oder einem der beiden Bauteile drehfest verbunden ist, dass die beiden Bauteile unmittelbar oder über das Koppelglied miteinander verriegelbar sind und dass die Verriegelung der beiden Bauteile durch eine Axialverschiebung des Koppelgliedes lösbar ist.

Nach einer ersten Ausführungsvariante der Vorrichtung kann das Koppelglied durch einen axial verschiebbar in dem vzw. als Scheibe ausgebildeten Antriebsglied angeordneten Ring oder durch eine Vielzahl von in dieses eingesetzter gemeinsam betätigbarer Stifte gebildet sein, der bzw. die mit einem der beiden Bauteile drehfest verbindbar sind.

Das in das Antriebsglied eingesetzte Koppelglied kann hierbei mittels eines Übertragungsgliedes betätigt werden, das vorzugsweise durch einen oder mehrere axial verschiebbar angeordnete Stifte gebildet sein kann.

Zweckmäßig ist es ferner, die beiden Bauteile in Neutralstellung des Koppelgliedes mittels eines oder mehrerer Raststifte miteinander zu verriegeln, die in einem der Bauteile entgegen der Kraft von Federn axial verschiebbar eingesetzt sind und in in dem anderen Bauteil vorgesehene Ausnehmungen eingreifen und dass das Koppelglied oder eines der Bauteile mit einem etwa in Höhe der Raststifte angeordneten Ansatzstück versehen sein sollte, mittels dem durch Axialverschiebung des Koppelgliedes die Raststifte unmittelbar oder über Zwischenglieder betätigbar sind und die Verriegelung lösbar ist.

Nach einer andersartigen Ausgestaltung kann das Koppelglied auf einer oder beiden Seitenflächen mit Verzahnungen oder Reibflächen versehen sein, die mit an dem Antriebsglied und/oder dem drehbar abgestützten Bauteil vorgesehenen Gegenverzahnungen oder Reibflächen zusammenwirken.

Bei dieser Ausführungsvariante sollte zur Verbindung des Antriebsgliedes mit dem Koppelglied unter Last der Abstand zwischen den an dem Antriebsglied und dem drehbar abgestützten Bauteil vorgesehenen Oberflächen der Verzahnungen größer bemessen sein als die axiale Breite des Koppelgliedes. Auch sollte das Koppelglied und das Antriebsglied bei Schaltvorgängen mit gleichen oder unterschiedlichen Drehzahlen antreibbar sein.

Ferner kann eine oder beide der an dem drehbar abgestützten Bauteil und an dem Koppelglied vorgesehenen Verzahnungen auf den Oberflächen mit einem verschleißfesten Reibbelag, einer Beschichtung oder einer Rändelung ausgestaltet werden.

Angebracht ist es auch, die an dem Koppelglied und dem Antriebsglied vorgesehenen zusammenwirkenden Verzahnungen, um hohe Drehmomente übertragen zu können, als Trapezverzahnungen und die an dem Koppelglied und dem drehbar abgestützten Bauteil vorgesehenen Verzahnungen als Spitzverzahnungen auszubilden.

Als weitere Ausführungsvariante ist vorgesehen das Koppelglied als Schiebemuffe auszubilden und über einen oder mehrere Stehbolzen drehfest mit dem drehbar abgestützten Bauteil zu verbinden, auf denen das Koppelglied axial verschiebbar gelagert oder drehfest mit dem Antriebsglied verbunden ist.

Bei zur wechselseitigen Verbindung des Koppelgliedes mit dem drehbar abgestützten Bauteil und dem Anspruchsglied vorgesehene Verzahnungen sollten die zusammenwirkenden Verzahnungen des Koppelgliedes und des Antriebsgliedes eine größere Zahntiefe aufweisen als die an dem drehbar abgestützten Bauteil und dem Koppelglied vorgesehenen zusammenwirkenden Verzahnungen.

Angebracht ist es des Weiteren, zur axialen Verstellung des Koppelgliedes eine Servereinrichtung in Form eines in einen Zylinder eingesetzten, ein- oder beidseitig vom Druckmittel gesteuert beaufschlagbaren und auf das Koppelglied einwirkenden Verstellkolbens oder eine elektrisch wirksame Servoeinrichtung vorzusehen.

Bei einer kraftschlüssigen Verbindung des Antriebsgliedes mit dem Koppelglied sollte das auf das Koppelglied einwirkende Verstellglied der Servereinrichtung mit einem in diesem drehbar abgestützten Einsatzstück versehen werden.

Nach einer Weiterbildung ist es vorteilhaft, zur axialen Verstellung des Koppelgliedes einen ortsfest angeordneten Elektromagneten zu verwenden, mittels dem das Koppelglied gesteuert entgegen der Kraft von Rückstellfedern verstellbar ist.

Sehr zweckmäßig ist es ferner, in das Koppelglied eine oder mehrere Federn einzusetzen, die in Richtung mit dem Koppelglied des drehfest verbundenen Bauteils wirksam sind, wobei die Federn jeweils auf einem Druckstück anzuordnen sind, die mit einem der Bauteile bzw. dem drehbar angeordneten Bauteil fest verbunden sind und auf dessen freies Ende die Federn einwirken.

Zur Bestimmung der axialen Lage des Koppelgliedes können ein oder mehrere, vorzugsweise berührungslos wirksame Signalgeber, die durch das Koppelglied mittels Schaltnocken oder dergleichen unmittelbar oder über Zwischenglieder beeinflussbar sind, oder eine Wegmesseinrichtung vorgesehen werden, deren Signale einer Steuereinrichtung oder dem Antriebsglied bzw. einem diesem zugeordneten Antriebsmotor zuführbar sind.

Wird eine Vorrichtung zur wechselseitigen Verbindung zweier gegeneinander verdrehbar angeordneter Bauteile an ein Antriebsglied mittels eines Koppelgliedes gemäß der Erfindung ausgebildet, ist es möglich, die jeweilige Verbindung jederzeit herzustellen, ohne dass es dazu besonders aufwendiger Steuerungen und/oder einer Synchronisation der zu verbindenden Bauteile bedarf. Aufgrund der jeweiligen konstruktiven Ausgestaltung und Anbindung der einzelnen Bauteile untereinander, ist es nämlich möglich, selbst wenn das Antriebsglied und das Koppelglied mit unterschiedenen Drehzahlen angetrieben werden, Schaltvorgänge auszuführen, ohne dass dabei ein Verklemmen oder eine Blockierung der Vorrichtung in Kauf zu nehmen ist. Die Verbindung des Koppelgliedes kann hierbei zuverlässig erst erfolgen, wenn die Verbindung des Koppelgliedes mit dem jeweils zugeordneten Bauteil gelöst ist. Auch kann nach einer Ausführungsvariante das Kupplungsglied von den beiden Bauteilen getrennt werden und ständig mit dem Antriebsglied umlaufen. In Betrieb der Spanneinrichtung ist somit ein Ein- und Ausschalten des Antriebsgliedes nicht erforderlich.

Der Bauaufwand sowie die Investitionen, mittels dem dies zu bewerkstelligen ist, sind äußerst gering, dennoch ist stets eine sichere und störungsfreie Betriebsweise über einen langen Zeitraum gegeben. Der Einsatzbereich einer mit einer vorschlagsgemäß ausgebildeten Koppelvorrichtung ausgestatteten Spanneinrichtung wird demnach in einem erheblichen Maße erweitert, wobei es auch möglich ist, hohe Antriebskräfte von dem Antriebsglied auf das Koppelglied und von diesem auf das anzutreibende Bauteil zu übertragen, sowie Verbindungen, unabhängig von den Drehzahlen, mit denen Bauteile umlaufen, herzustellen.

In der Zeichnung sind einige Ausführungsbeispiele der gemäß der Erfindung ausgebildeten Koppelvorrichtung dargestellt und nachfolgend im Einzelnen erläutert. Hierbei zeigen:
- Figur 1: eine Spanneinrichtung für eine Werkzeugmaschine mit zwischen dem Antriebsglied und der Spanneinrichtung eingesetzter Koppelvorrichtung, teilweise den Längsschnitt,

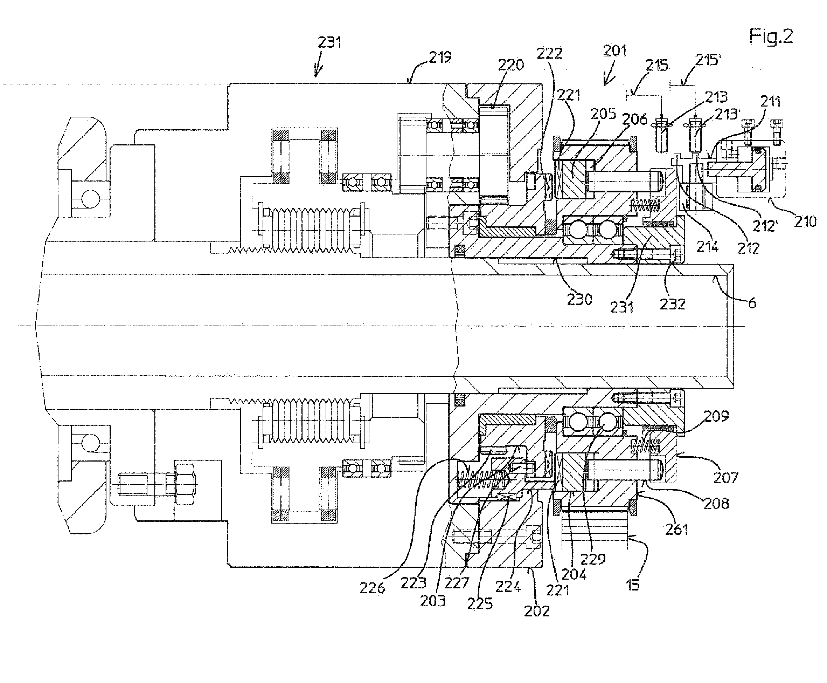

- Figuren 2 und 3: die Koppelvorrichtung nach Figur 1 in unterschiedlichen Betriebszuständen und in vergrößerter Wiedergabe,
- Figur 4: eine andersartig ausgebildete Koppelvorrichtung, eingebaut bei der Spanneinrichtung nach Figur 1,
- Figuren 5a und 5b: die Koppelvorrichtung nach Figur 4 in unterschiedlichen Betriebsstellungen, jeweils in vergrößerter Wiedergabe,
- Figur 6: eine Ausführungsvariante der Koppelvorrichtung nach Figur 5b,
- Figur 7: eine weitere Ausführungsvariante einer Koppelvorrichtung,
- Figuren 8 und 9: eine mittels eines Elektromagneten zur Verstellung des Koppelgliedes ausgestattete Koppelvorrichtung, in unterschiedlicher Betriebsstellung,
- Figuren 10 und 11: eine weitere Ausführungsvariante der Koppelvorrichtung nach Fig. 8, wiederum in unterschiedlichen Betriebsstellungen und
- Figuren 12 und 13 sowie 14 und 15: weitere Ausgestaltungen der Koppelvorrichtung nach Figur 1, jeweils in unterschiedlichen Betriebsstellungen und vergrößerten Wiedergaben.

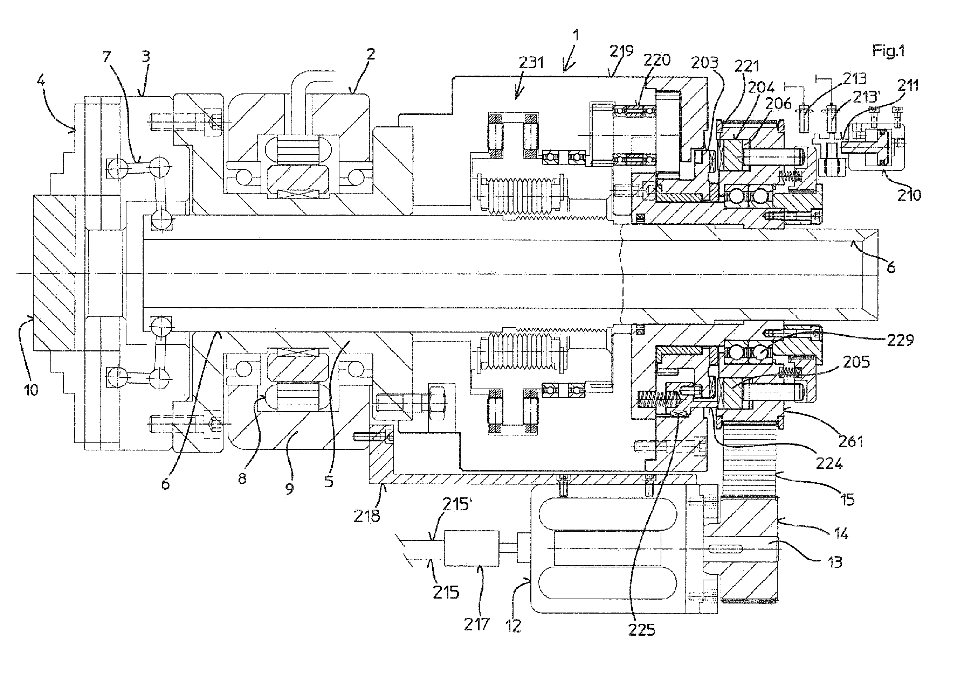

Die in Fig. 1 dargestellte und mit 1 bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 eingespannt ist. Die Spannbacken 4 des Kraftfutters 3 sind hierbei über Umlenkhebel 7 durch eine axial verstellbare Zugstange 6 betätigbar, die mit einem umschaltbaren elektrischen Servomotor 12 über ein Antriebsglied 261 und einen Bewegungswandler 231 in Triebverbindung steht. Mittels des in einem mit einer Maschinenspindel 5 fest verbundenen Gehäuse 219 eingesetzten Bewegungswandler 231 werden die rotatorischen Verstellbewegungen des Servomotors 12 in axiale Zustellbewegungen der Zugstange 6 umgewandelt.

Der Servomotor 12 ist hierbei über eine auf dessen Rotorwelle 13 angeordnete Riemenscheibe 14 sowie einem Zahn- oder Treibriemen 15 mit dem Antriebsglied 261 verbunden, das mittels eines Wälzlagers 229 auf der Zugstange 6 drehbar gelagert ist. Mittels eines Trägers 218 ist der Servomotor 11 an einem Spindelstock 9 befestigt, in dem auch ein Antriebsmotor 8 der Werkzeugmaschine 2 eingebaut ist.

Um das Antriebsglied 261 trieblich mit der Spanneinrichtung 1 verbinden zu können, ist eine Koppelvorrichtung 201 vorgesehen, die ein axial verstellbares Koppelglied 204 aufweist. Das Koppelglied 204 besteht hierbei aus einem axial verschiebbaren Ring 205, der in einer in das Antriebsglied 261 eingearbeiteten Ausnehmung 206 eingesetzt und durch eine von Druckmittel beaufschlagbare Servoeinrichtung 210 betätigbar ist. Über ein Verstellglied 207, das verschiebbar auf einer auf der Zugstange 6 angeordneten Hülse 231 abgestützt ist, und Bolzen 208, auf die das Verstellglied 207 einwirkt, werden die von der Servoeinrichtung 210 ausgelösten Verstellbewegungen mittels Nadelrollen 214 auf das entgegen der Kraft von Federn 209 verschiebbare Verstellglied 207 übertragen.

Die Spanneinrichtung 1 weist zwei Bauteile 202 und 203 auf, die bei einem Arbeitsvorgang miteinander verriegelt sind und gemeinsam mit umlaufen. Das Bauteil 202 ist über eine Glocke 219, in die auch der Bewegungswandler 231 eingebaut ist, dazu fest mit der Maschinenspindel 5 verbunden, das Bauteil 203 ist dagegen drehbar auf einer Hülse 230 abgestützt, die auf der Zugstange 6 angeordnet und mit der Hülse 231 über Schrauben 232 verbunden ist. Über ein Sonnenrad 223 steht das Bauteil 203 mit einem Planetenradgetriebe 220 in Triebverbindung, das mit dem Bewegungswandler 231 zusammenwirkt.

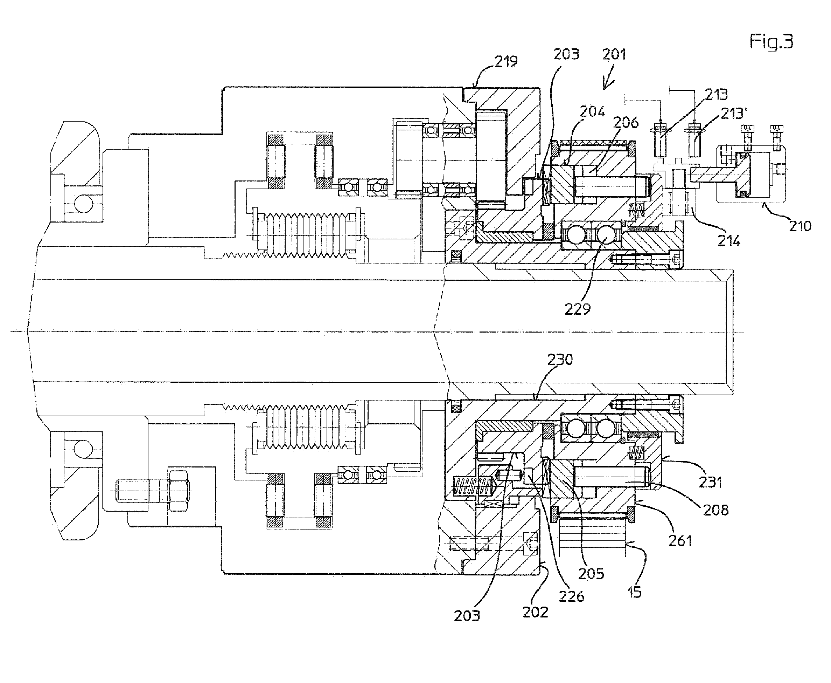

Bei den auf der Werkzeugmaschine 2 auszuführenden Arbeitsvorgängen sind die beiden Bauteile 202 und 203 miteinander verriegelt und laufen somit gemeinsam um. Dazu sind in das Bauteil 202 Stößel 224 eingesetzt, die jeweils über einen Keil 225 formschlüssig mit dem Bauteil 202 verbunden und gegen die Kraft von Federn 226 axial verschiebbar sind. Außerdem weisen die Stößel 224 Rastbolzen 227 auf, und das Bauteil 203 ist mit Ausnehmungen 226 versehen, in die die Rastbolzen 227 eingreifen. Durch eine Axialverschiebung des Koppelgliedes 204 nach links, wie dies in Figur 3 gezeigt ist, werden durch den Ring 205 die Stößel 224 ebenfalls nach links verschoben, so dass die Stifte 227 von dem Bauteil 203 gelöst werden und somit die beiden Bauteile 202 und 203 nicht mehr miteinander verbunden sind.

An dem Ring 205 ist auf der dem Bauteil 203 zugekehrten Seitenfläche eine Verzahnung 221 angearbeitet, und das Bauteil 203 ist mit einer zugeordneten Verzahnung 222 versehen, die, um eine Änderung des Betriebszustandes der Spanneinrichtung 1 vorzunehmen, ineinander eingerückt werden können. Über das Koppelglied 204 und die Verzahnungen 221 und 222 ist somit das Antriebsglied 261 mit dem Bauteil 203 trieblich verbunden. Die Antriebsenergie des Servomotors 12 wird demnach über das Planetenradgetriebe 220 und den Bewegungswandler 231 dem Kraftspannfutter 3 zugeführt, um Verstellbewegungen der Spannbacken 4 auszulösen.

Da dem Verstellglied 207 ein mit Schaltnocken 212 und 212' versehenes Zwischenglied 211, die mit Signalgebern 213 bzw. 213' zusammenwirken, zugeordnet ist, ist die jeweilige Lage des Koppelgliedes 204 bestimmbar. Über Signalleitungen 215 bzw. 215' sind die Signale einer Steuereinrichtung 217 zuführbar, so dass auf einfacher Weise vor dem Einrücken der Verzahnung 221 in die Verzahnung 222 des Bauteils 203 eine Synchronisation vorgenommen werden kann.

Wird die Servoeinrichtung 210 zurückgestellt, wird mit Hilfe der in das Antriebsglied 261 eingesetzter Druckfedern 209 das Verstellglied 207 nach rechts verschoben, so dass die Verzahnungen 221 und 222 voneinander gelöst werden. Außerdem werden durch die Druckfedern 226 die Stößel 224 ebenfalls nach rechts bewegt. Die Stifte 227 rasten wiederrum in den Ausnehmungen 228 ein, so dass die beiden Bauteile 202 und 203 miteinander verriegelt sind.

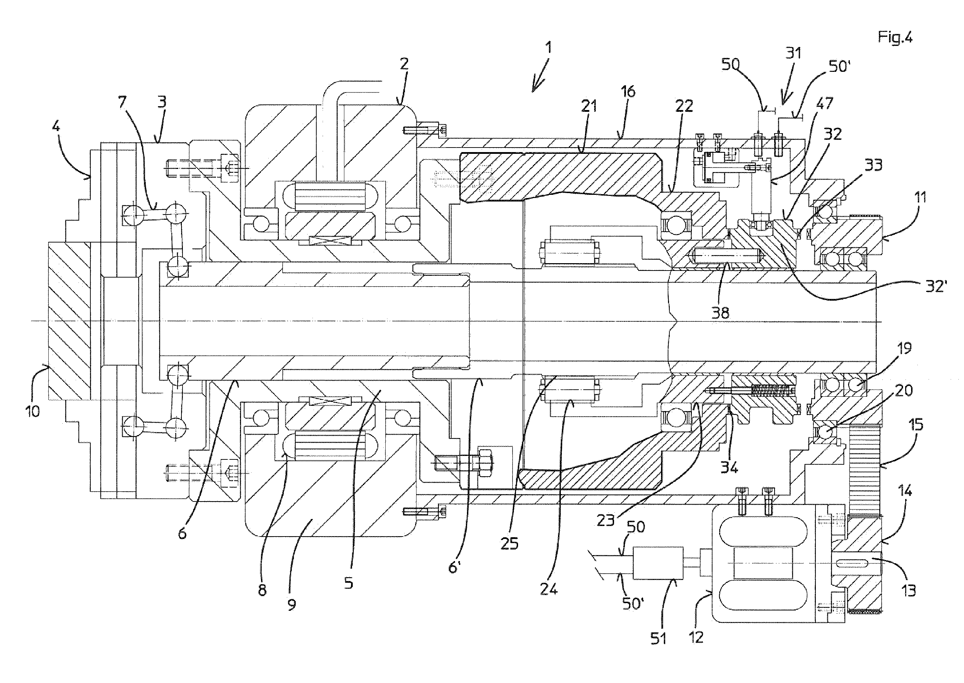

Bei der Ausführungsform der Koppelvorrichtung 31 nach den Figuren 4 bis 6 ist das axial verstellbare Koppelglied 32 als Scheibe 32' ausgebildet, die über Stehbolzen 38 mit einem Bewegungswandler 24 zum Beispiel über ein schematisch dargestelltes Planetenradgetriebe und einem an diesem vorgesehenen Ansatzstück 23 als inneres Bauteil drehfest verbunden ist. Die Stehbolzen 38 sind hierbei in das Ansatzstück 23 eingearbeitete Bohrungen 37 verschiebbar abgestützt, in dem Koppelglied 32 dagegen in Bohrungen 36 fest eingepresst. Das Koppelglied 32 ist nach rechts entgegen der Kraft von Druckfedern 40, die auf an dem Ansatzstück 23 befestigte Druckstücke 39 einwirken, verschiebbar.

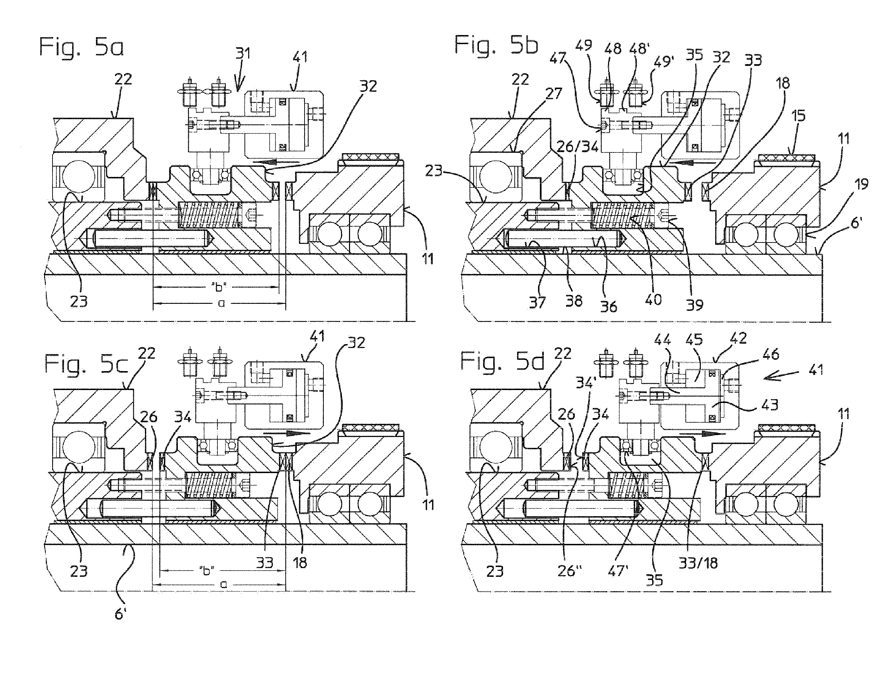

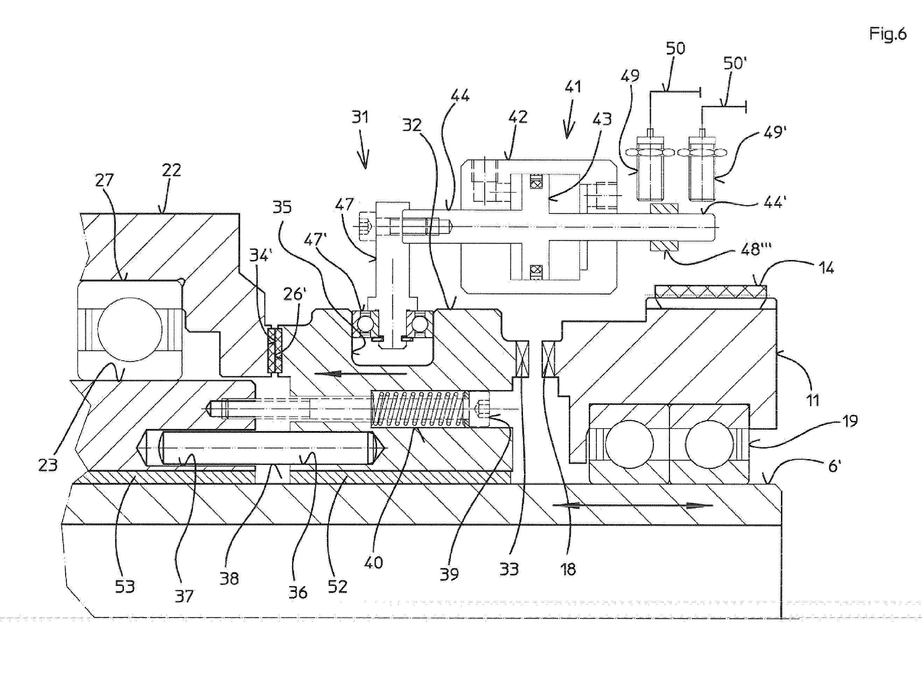

Das Koppelglied 32, das wie auch das Ansatzstück 23 mittels Gleitlager 52 bzw. 53 auf der zweiteiligen Zugstange 6' drehbar gelagert ist, ist mit Hilfe einer Servoeinrichtung 41 axial gesteuert verschiebbar. Als Servoeinrichtung 41 ist ein in einem Zylinder 42 eingesetzter und beidseitig von einem Druckmittel beauflagbarer Kolben 43 vorgesehen, an dessen Kolbenstange 44 ein Verstellglied 47 angebracht ist. Das Verstellglied 47 greift, wie dies insbesondere auch den Fig. 5a bis 5d und 6 zu entnehmen ist, über ein Wälzlager 47' in eine in das Koppelglied 32 eingearbeitete umlaufende Nut 35 eingereicht ein. Wird den in dem Zylinder 42 vorgesehenen Druckräumen 45 oder 46 wechselweise Druckmittel zugeführt, werden der Kolben 43 und mit diesem das auf das Koppelglied 32 einwirkende Verstellglied 47 axial verschoben, so dass somit die jeweils gewünschte Verbindung bewerkstelligt wird.

Das Koppelglied 32 ist, wie dies in den Fig. 5a bis 5d im Einzelnen dargestellt ist, in unterschiedliche Schaltstellungen verschiebbar, um einerseits das Antriebsglied 11 mit dem dem Bewegungswandler 24 zugeordneten Ansatzstück 23 und andererseits dieses mit dem an dem Gehäuse 21 vorgesehenen Zwischenstück 22 und somit mit der Maschinenspindel 5 zu verbinden.

Bei der Ausführungsform nach Fig. 4 bzw. den Fig. 5a bis 5d wird dies formschlüssig bewerkstelligt. Dazu sind an dem Antriebsglied 11 und dem Zwischenstück 22 auf den dem Koppelglied 32 zugekehrten Seitenflächen Verzahnungen 18 bzw. 26 angebracht, in die an dem Koppelglied 32 beidseits vorgesehene Verzahnungen 33 bzw. 34 eingeführt werden können. Das Antriebsglied 11 ist bei dieser Ausgestaltung mittels Walzlager 19 bzw. 20 auf der Zugstange 6' und einer Glocke 16, die an der Werkzeugmaschine 2 befestigt ist, drehbar gelagert.

In Fig. 5a befindet sich das Koppelglied 32 in einer Art Mittelstellung, die an diesem vorgesehene Verzahnungen 33 und 34 greifen nicht in die Verzahnungen 18 des Antriebsgliedes 11 bzw. 26 des Zwischenstückes 22 ein. Der Abstand a zwischen den Oberflächen der Verzahnungen 18 und 26 ist nämlich größer gewählt als die axiale Breite b des Koppelgliedes 32, so dass mit Sicherheit ein vorzeitiges Einrasten vermieden ist.

In der Betriebsstellung nach Fig. 5b greift die Verzahnung 34 des Koppelgliedes 32 in die an dem über ein Wälzlager 27 auf dem Ansatzstück 23 abgestützten Zwischenstück 22 eingearbeitete Verzahnung 26 ein. Das Zwischenstück 22 ist in diesem Betriebszustand über das Koppelglied 32 und die Stehbolzen 38 formschlüssig mit dem Ansatzstück 23 verbunden. In Bezug auf die Spanneinrichtung 1 bedeutet dies, dass diese blockiert ist und mit der Maschinenspindel 5 umläuft. Verstellbewegungen können somit nicht ausgeführt werden, vielmehr wird die Spannstellung gehalten.

In Fig. 5c ist wiederum eine Schaltstellung vor dem Einrücken der Verzahnung 33, des Koppelgliedes 32 in die Verzahnung 18 des Antriebsgliedes 11 dargestellt. Gemäß Fig. 5d greift dagegen die Verzahnung 33 des Koppelgliedes 32 in die Verzahnung 18 des Antriebsgliedes 11 ein. Dieses ist demnach drehfest mit dem Ansatzstück 23 verbunden, so dass die rotatorischen Verstellbewegungen des Antriebsgliedes 11 bzw. Servomotors 12 über den Bewegungswandler 24, der über eine Verzahnung 25 mit der Zugstange 6'verbunden ist, auf das Kraftspannfutter 3 übertragen werden und dieses gespannt bzw. gelöst wird.

Die Betriebsstellungen des Koppelgliedes 32 werden, wie dies im Einzelnen auch den Fig. 5a bis 5d und 6 zu entnehmen ist, mittels an dem Verstellglied 47 bzw. der Kolbenstange 44' angeformter Schaltnocken 48 und 48' bzw. 48" sowie mit diesen zusammen wirkenden Signalgebern 49 und 49' festgestellt. Über Signalleitungen 50 und 50' werden die Signale zur Verwertung einer Steuereinrichtung 51 zugeführt, mittels der der Servomotor 12 gesteuert, d.h. ein- oder ausgeschaltet und oder dessen Drehzahl geregelt werden kann.

Durch diese Ausgestaltung wird es ermöglicht, die Verzahnung 33 des Koppelgliedes 32, auch wenn das Antriebsglied 11 mit einer Drehzahldifferenz zu diesem angetrieben wird, vollständig in die Verzahnung 18 des Antriebsgliedes 11 anzuführen.

Die an dem Zwischenstück 22 vorgesehene Verzahnung 26 kann, wie dies in Fig. 5d dargestellt ist, zumindest auf der Oberfläche mit einem Reibbelag 26" versehen sein. Ein derartiger Reibbelag kann auch auf der Oberfläche der Verzahnung 34 des Koppelgliedes 32 angebracht werden.

Gemäß der Ausführungsvariante nach Fig. 6 können anstelle von Verzahnungen an dem Zwischenstück 22 und dem Koppelglied 32, die als Spitzverzahnungen ausgebildet sein können, Reibbeläge 26' bzw. 34' angebracht werden, da bei einer Verbindung des Zwischenstückes 23 mit dem Ansatzstück 22, wie dies in Fig. 3 dargestellt ist, keine hohen Kräfte zu übertragen sind, um zum Beispiel den Spannzustand des Kraftspannfutters 3 aufrecht zu erhalten. Dagegen können die ineinandergreifenden Verzahnungen 18 und 33, die an dem Antriebsglied 11 bzw. dem Koppelglied 32 angebracht sind, als Trapezverzahnungen ausgebildet werden, so dass zur Verstellung des Kraftspannfutters 3 hohe Kräfte in dieses eingeleitet werden können.

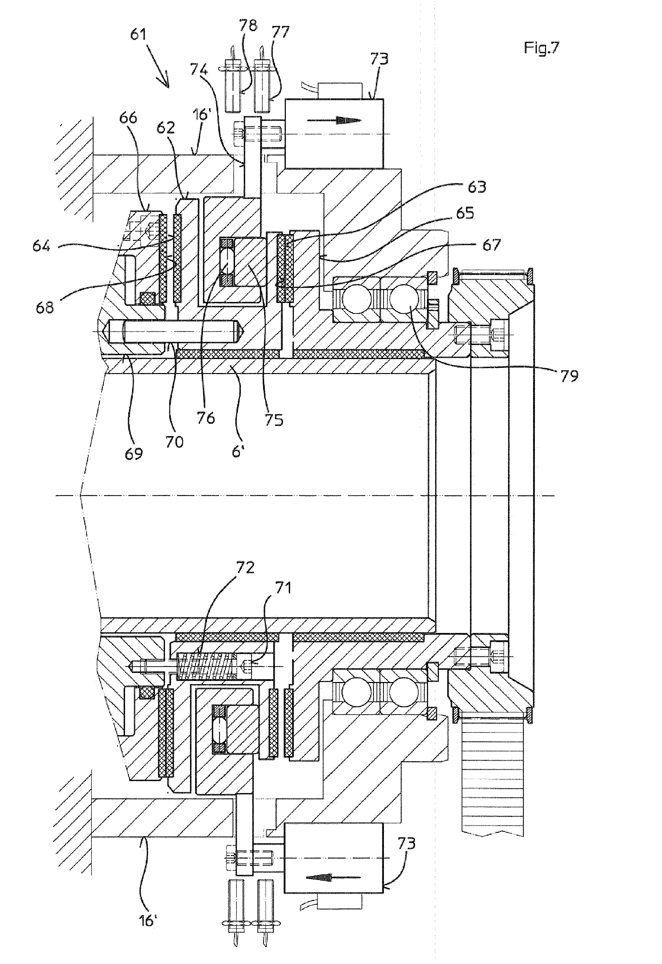

Bei der Koppelvorrichtung 61 nach Fig. 7 sind an einem Koppelglied 62 auf beiden Seitenflächen Reibbeläge 63 und 64 angebracht, die mit an dem Antriebsglied 65 sowie dem anzutreibenden Bauteil 66 vorgesehene Reibbeläge 67 bzw. 68 in gleicher Weise wie nach den Fig. 5a bis 5d zusammenwirken. Das mit dem Koppelglied 62 über Stehbolzen 70 drehfest verbundene Bauteil 69 ist in der in der oberen Hälfte der Fig. 7 gezeigten Betriebsstellung kraftschlüssig mit dem Antriebsglied 65 verbunden. Das Antriebsglied 65 ist hierbei über ein Wälzlager 79 in einer Glocke 16' drehbar abgestützt.

Mit einer Servoeinrichtung 73 ist ein Verstellglied 74 axial verschiebbar verbunden, dessen jeweilige Lage mittels ortsfest angeordnete Signalgeber 77 und 78 ermittelbar ist. Da das Koppelglied 62 mit dem Bauteil 69 umläuft, das Verstellglied 74 aber an der Servoeinrichtung 73 abgestützt ist, ist in dem Verstellglied 74 ein Einsatzstück 75 drehbar angeordnet, das zusammen mit dem Koppelglied 62 ebenfalls umläuft und mittels eines Wälzlagers 76 an dem Verstellglied 74 abgestützt ist. Mit Hilfe von Druckfedern 72, die an in das Bauteil 69 eingesetzte Druckstücke 71 abgestützt sind und auf das Koppelglied 62 einwirken, wird dieses, wie dies in der unteren Hälfte der Figur dargestellt ist, ohne Beeinflussung durch die Servoeinrichtung 73 gegen das Bauteil 69 gepresst.

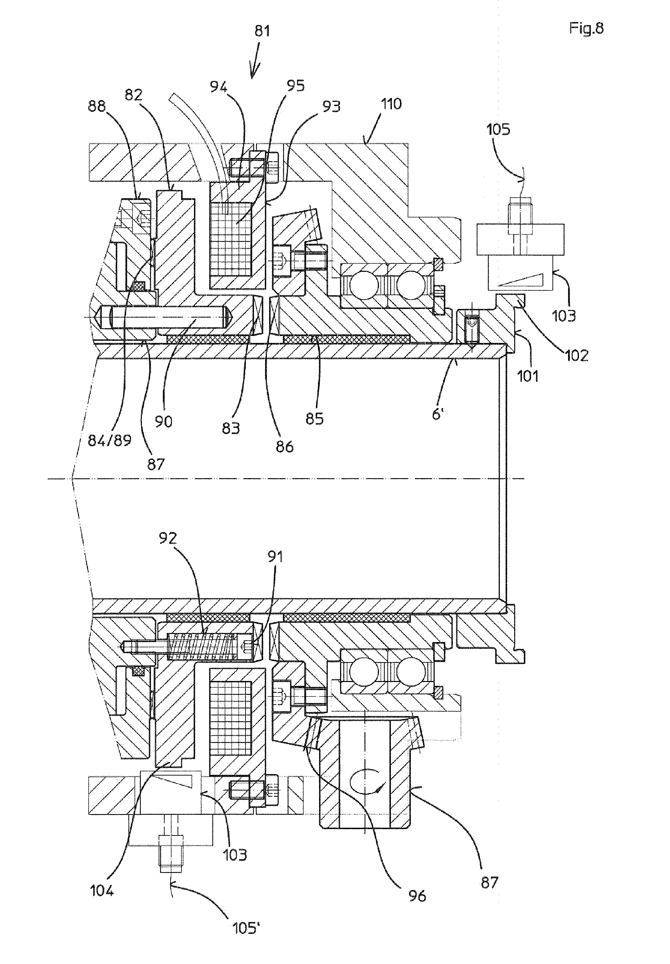

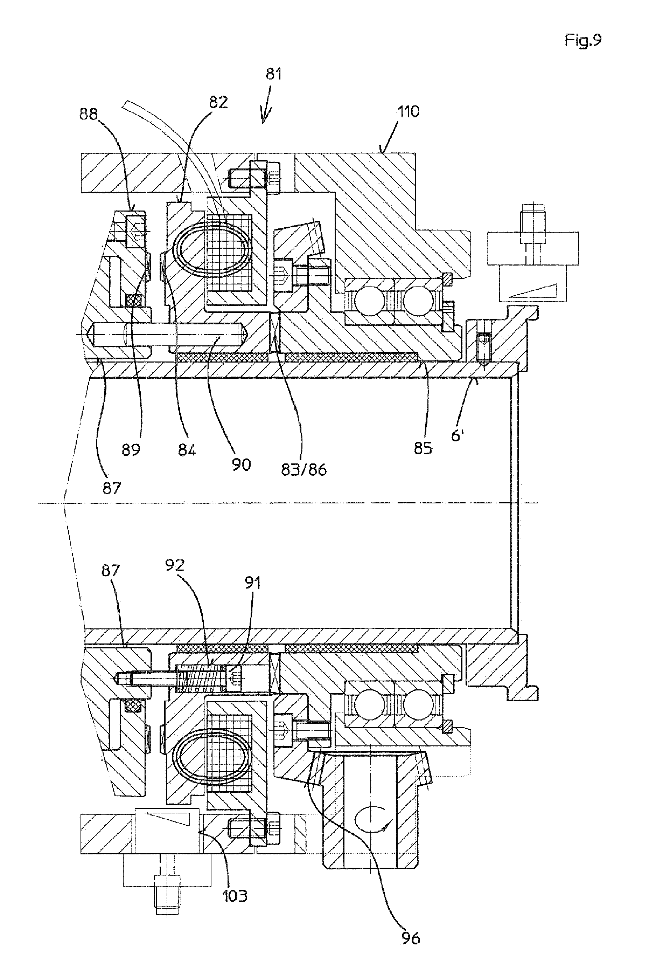

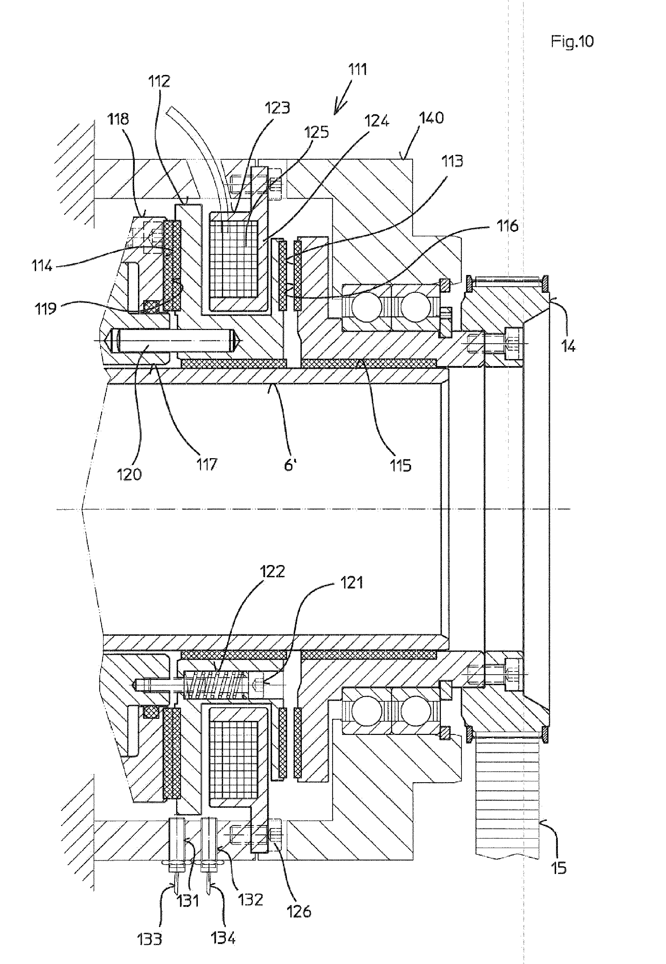

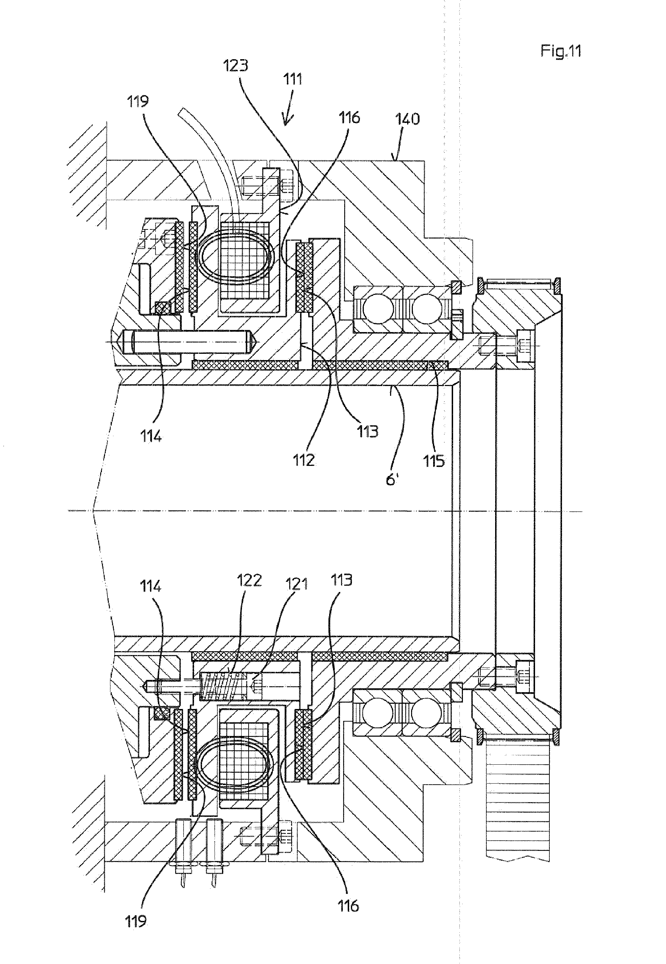

Bei den in die Fig. 8 und 9 bzw. 10 und 11 gezeigten Koppelvorrichtungen 81 bzw. 111 ist zur axialen Verstellung eines Koppelgliedes 82 bzw. 112 jeweils ein Elektromagnet 93 bzw. 123 vorgesehen, die an einer Glocke 110 bzw. 140 befestigt sind. Bei der Ausgestaltung nach den Fig. 8 und 9 ist ein Antriebsglied 85 über ein an diesem befestigtes Zahnrad 96 sowie einen in dieses eingreifenden Antriebsstrang 87 mit einem nicht dargestellten Servomotor verbunden, bei der Ausführungsvariante nach den Fig. 10 und 11 wird die Antriebsenergie dem Antriebsglied 115 wiederum über einen Riemenscheibel 14 und einem Zahnriemen 15 zugeführt.

Die Triebverbindung des Koppelgliedes 82 mit dem Antriebsglied 85 und dem Bauteil 88 erfolgt über Verzahnungen 83 und 84 bzw. 86 und 89, die an dem Koppelglied 82 bzw. dem Antriebsglied 85 und dem Bauteil 88 angebracht sind. Mit dem Bauteil 87 ist das Koppelglied 82 dagegen über Stehbolzen 90 drehfest verbunden.

In Neutralstellung (Fig. 8) wird das Koppelglied 82 durch die Kraft von Druckfedern 92, die mit Druckstücken 91 zusammenwirken, gegen das Bauteil 88 gepresst, so dass die beiden Bauteile 87 und 88 drehfest miteinander verbunden sind. Bei Erregung einer in einen Magnetkörper 94 des Elektromagneten 93 eingesetzten Magnetspule 95 (Fig. 9) wird dagegen das Koppelglied 82 in Richtung des Magnetkörpers 93 verschoben und die Verzahnungen 83 und 86 werden eingerückt, so dass das Bauteil 87 drehfest mit dem Antriebsglied 85 verbunden ist.

Zur Bestimmung der jeweiligen Lage des Koppelgliedes 82 sind bei der Vorrichtung 81 nach den Fig. 8 und 9 Wegmess-Einrichtungen 103 vorgesehen, die mit an einem Schaltring 101 bzw. dem Koppelglied 82 angeformter Schaltnocken 102 bzw. 104 zusammenwirken. Über Signalleitungen 105 bzw 105' werden die ermittelten Signale wiederum einer Steuereinrichtung zur Beeinflussung des auf das Antriebsglied 81 einwirkenden Servo-Motors zugeführt. Die Wegmesseinrichtung 103 dient hierbei dazu, die jeweilige Lage der Zugstange 6 zu ermitteln, mit Hilfe der Wegmesseinrichtung 103 kann dagegen die Stellung des Koppelgliedes 82 bestimmt werden.

In gleicher Weise wie die Vorrichtung 81 nach Fig. 8 ist auch die Koppelvorrichtung 111 nach den Fig. 10 und 11 wirksam. Zur Verbindung des Koppelgliedes 112 mit einem Antriebsglied 115 bzw. einem Bauteil 118 sind an diesen Reibbeläge 113, 114 bzw. 116, 119 angebracht. Zur verschiebbaren Lagerung des Koppelgliedes 112 dienen wiederum Stehbolzen 120, durch die das Koppelglied 112 auch drehfest mit einem Bauteil 117 verbunden ist. Des Weiteren sind in das Koppelglied 112 mehrere Durckfedem 122 eingesetzt, die dieses, sofern die in dem Magnetkörper 124 angeordnete Magnetspule 125 des Elektromagneten 123 nicht erregt ist, gegen das Bauteil 118 pressen (Fig. 10). Sobald jedoch der Magnetspule 124 elektrische Energie zugeführt wird, wird das Koppelglied 112 entgegen der Kraft der Druckfedern 122, die sich an in dem Bauteil 117 eingesetzte Druckstücke 121 abstützen (Fig. 11), gegen das Antriebsglied 115 gepresst. Dieses ist somit reibschlüssig mit dem Bauteil 118 verbunden.

Mittels zweier in die Glocke 140 eingesetzter Signalgeber 131 und 132, die unmittelbar mit dem Koppelglied 112 zusammenwirken, werden die der jeweiligen Lage des Koppelgliedes 112 zugeordneten Signale über Signalleitungen 133 bzw. 134 einer dem Servomotor vorgeschalteten Steuereinrichtung zugeleitet und zu dessen Steuerung ausgenutzt.

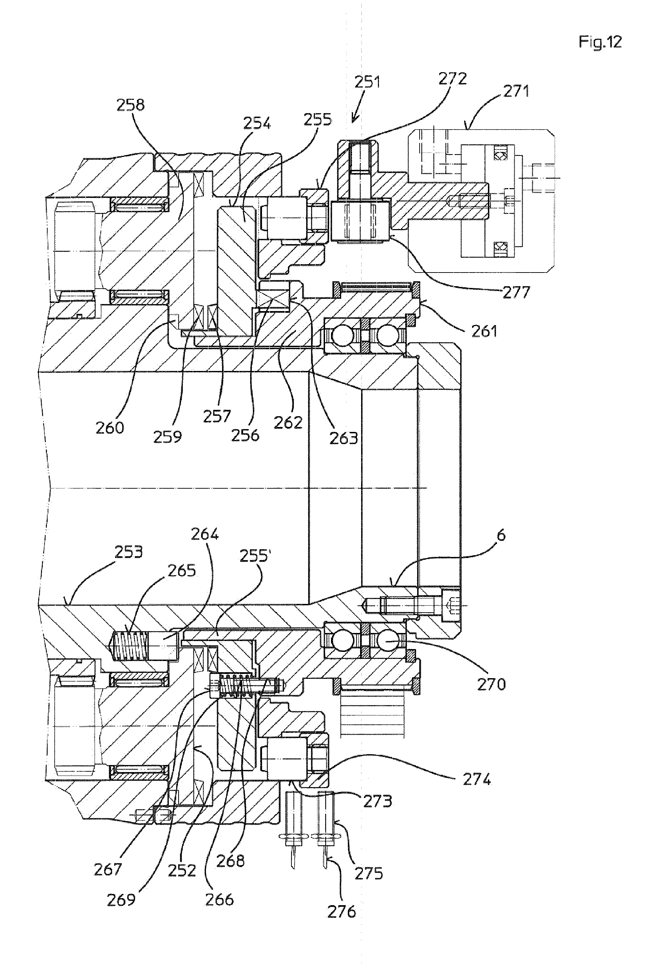

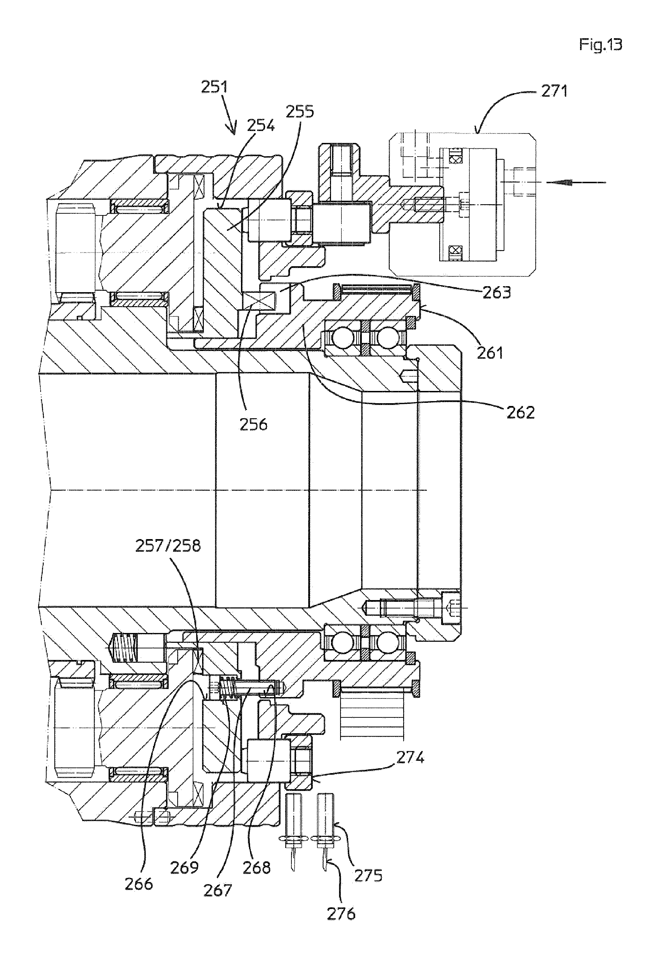

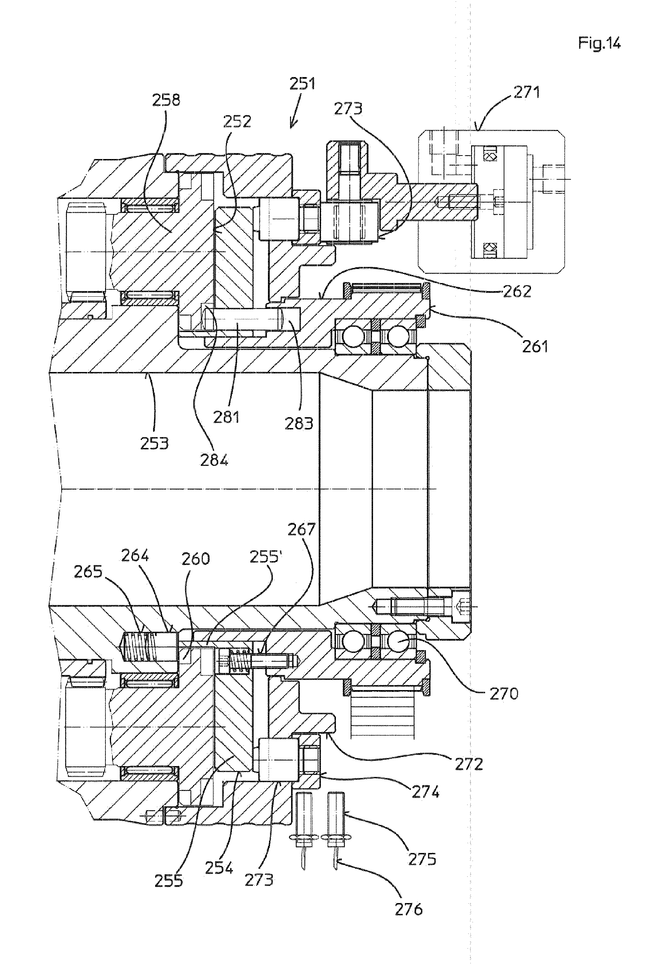

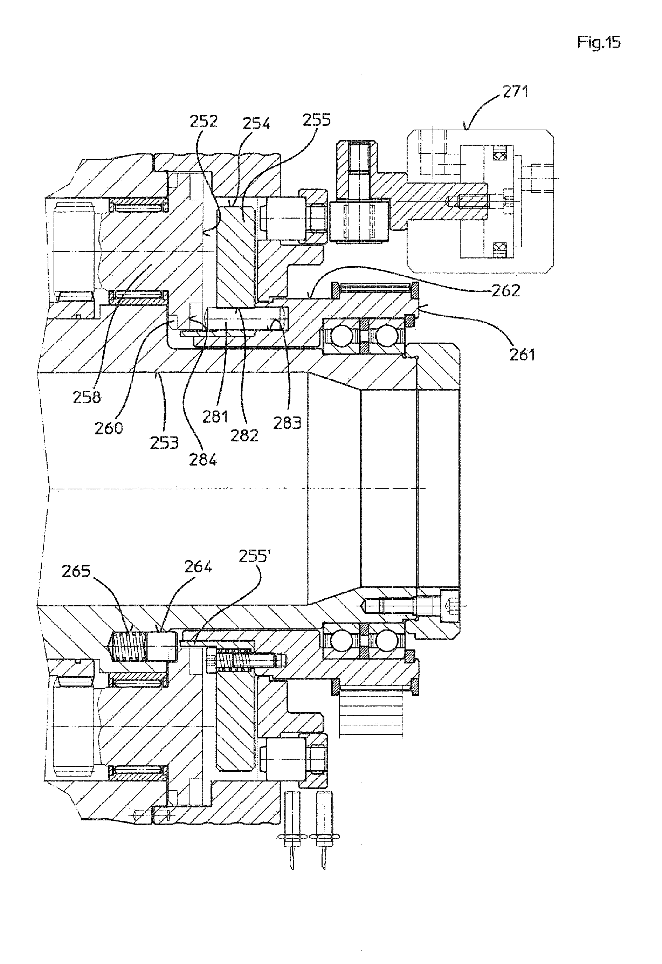

Bei den in den Figuren 12 bis 15 dargestellten und jeweils mit 251 bezeichneten Koppelvorrichtungen besteht das Koppelglied 254 aus einer Ringscheibe 255, die mittels einer Servoeinrichtung 271 und eines dieser zugeordneten Verstellgliedes 272 über Nadelrollen 277 betätigbar ist. Das Koppelglied 254 ist hierbei ständig mit dem Antriebsglied 261 trieblich verbunden, und zwar bei der Ausgestaltung nach den Figuren 12 und 13 über ineinandergreifende Verzahnungen 256 und 253, die an der Scheibe 255 und einem Ansatzstück 262 des Antriebsgliedes 261 angearbeitet sind, bzw. nach den Figuren 14 und 15, über Stifte 281, die in Bohrungen 282 der Scheibe 255 fest eingesetzt sind und in in dem Antriebsglied 261 vorgesehenen Bohrungen 283 eingreifen. Das Antriebsglied 261 ist dazu mit dem axial abstehenden Ansatz 262 ausgestattet, der die Verzahnung 263 bzw. die Bohrungen 283 aufweist.

Die beiden Bauteile 252 und 253, die in gleicher Weise wie bei der Ausgestaltung nach Figur 1 der Spanneinrichtung 1 zugeordnet sind, sind über Raststifte 264 die in dem Bauteil 253 eingesetzt und entgegen der Kraft von Federn 265 verschiebbar sind, miteinander verriegelbar. Über einen von der Scheibe 255 abstehenden Ansatz 255' sind die Raststifte 264, die in Planetenräder 258 eingearbeitete Ausnehmungen 284 eingreifen, wie dies den Figuren 13 und 15 zu entnehmen ist, betätigbar.

Bei der Ausgestaltung nach den Figuren 13 und 14 ist das Koppelglied 254 über eine an der Scheibe 255 angeformte Verzahnung 257 und an den Planetenrädern 258 vorgesehenen Verzahnungen 259 mit diesen formschlüssig verbindbar. Bei der Ausführungsform nach den Figuren 14 und 15 wird dies mittels der Stifte 281 bewerkstelligt, die in die in die Planetenräder 258 z.B. nach Art einer Triebstock-Verzahnung eingearbeitete Ausnehmungen 284 einführbar sind. Auf diese Weise ist das Antriebsglied 261, das mittels eines Lagers 270 auf der Zugstange 6 drehbar gelagert ist, über das Koppelglied 254 zur Übertragung von Energien in das Kraftspannfutter 4 verbindbar.

Die Scheiben 255 der beiden Koppelvorrichtungen 251 sind über Stiftschranken 267, die in das Antriebsglied 281 eingearbeitete Gewindebohrungen 268 eingesetzt sind, mit diesem drehfest verbunden und in der Scheibe 255 vorgesehene Ausnehmungen 266 entgegen der Kraft von Federn 269 verschiebbar. Wird die Servoeinrichtung 271 in die in den Figuren 12 und 14 gezeigte Betriebsstellung zurückgeführt, wird die Verbindung der Scheibe 255 mit den Planetenrädern 258 selbsttätig gelöst und die beiden Bauteile 252 und 253 werden über die Stifte 264, die in die Ausnehmungen 260 einrasten können, miteinander verriegelt.

An dem Verstelllglied 272, das über Stößel 273 auf die Scheibe 255 einwirkt, sind Schaltnocken 274 angeformt, die zur Ermittlung der jeweiligen Stellung des Koppelgliedes 254 mit Signalgebern 275 zusammenwirken, deren Signale über Signalleitungen 276 wiederrum einer Steuereinrichtung zuführbar sind. Die Drehzahl des Antriebsgliedes 261 bzw. des diesem zugeordneten Servomotors kann somit entsprechend dem ermittelten Betriebszustand geregelt werden.

## Patentansprüche

1. Vorrichtung (201; 31; 61; 81; 111; 251) zur wechselseitigen Verbindung zweier gegeneinander verdrehbar angeordneter Bauteile (202; 22; 66; 88; 118; 252) bzw. (203; 23; 69; 87; 117; 253) an ein Antriebsglied (261; 11; 65; 115) mittels eines axial verstellbaren Koppelgliedes (204; 32; 62; 82; 112; 254), insbesondere zur Verbindung eines Antriebsgliedes (261; 11; 85; 115) einer elektrischen Spanneinrichtung (1) mit dieser, durch die die rotatorischen Verstellbewegungen des Antriebsgliedes (261; 11; 85; 115) in axiale Verstellbewegungen umwandelbar sind,
**dadurch gekennzeichnet, dass** das Koppelglied (204; 32; 62; 82; 112; 254) mit dem Antriebsglied (261; 11; 85; 115) oder einem der beiden Bauteile (202; 22; 66; 88; 118; 252 bzw. 203; 23; 69; 87; 117; 253) drehfest verbunden ist, dass die beiden Bauteile (202; 22; 66; 88; 118; 252) bzw. (203; 23; 69; 87; 117; 253) unmittelbar oder über das Koppelglied (204; 32; 62; 82; 112; 254) miteinander verriegelbar sind und dass die Verriegelung der beiden Bauteile (202; 22; 66; 88; 118; 252 bzw. 203; 23; 69; 87; 117; 253) durch eine Axialverschiebung des Koppelgliedes (204; 32; 62; 82; 112; 254) lösbar ist.

2. Vorrichtung nach Anspruch 1
**dadurch gekennzeichnet,**
**dass** das Koppelglied (204) durch einen axial verschiebbar in dem vzw. als Scheibe (205) ausgebildeten Antriebsglied (261) angeordneten Ring (205) oder durch eine Vielzahl von in dieses eingesetzter gemeinsam betätigbarer Stifte gebildet ist, der bzw. die mit einem der beiden Bauteile (202; 203) drehfest verbindbar sind.

3. Vorrichtung nach Anspruch 1 oder 2
**dadurch gekennzeichnet,**
**dass** das in das Antriebsglied (261) eingesetzte Koppelglied (204) mittels eines durch einen oder mehrere axial verschiebbarer Stifte (280) gebildeten Übertragungsgliedes betätigbar ist.

4. Vorrichtung nach einem der Ansprüche 1 bis 3,
**dadurch gekennzeichnet,**
**dass** die beiden Bauteile (202; 203 bzw. 252; 253) in Neutralstellung des Koppelgliedes (204; 254) mittels eines oder mehrerer Raststifte (227; 264) miteinander verriegelt sind, die in einem der Bauteile (202; 252) entgegen der Kraft von Federn (226; 265) axial verschiebbar eingesetzt sind und in in dem anderen Bauteil (203; 252) vorgesehene Ausnehmungen (226; 260) eingreifen.

5. Vorrichtung nach Anspruch 4,
**dadurch gekennzeichnet,**
**dass** das Koppelglied (254) oder eines der Bauteile (202) mit einem etwa in Höhe der Raststifte (227; 264) angeordneten Ansatzstück (255'; 224) versehen ist, mittels dem durch Axialverschiebung des Koppelgliedes (254 bzw. 205) die Raststifte (227; 264) unmittelbar oder über Zwischenglieder betätigbar sind und die Verriegelung lösbar ist.

6. Vorrichtung nach Anspruch 1,
**dadurch gekennzeichnet,**
**dass** das Koppelglied (204; 32) auf einer oder beiden Seitenflächen mit Verzahnungen (221; 33, 34) oder Reibflächen (63, 64; 113, 114) versehen ist, die mit an dem Antriebsglied (261; 11; 85; 115) und/oder dem drehbar abgestützten Bauteil (202; 22; 66; 88; 118; 252) vorgesehenen Gegenverzahnungen (26; 68; 89) oder Reibflächen (119) zusammenwirken.

7. Vorrichtung nach Anspruch 6
**dadurch gekennzeichnet,**
**dass** zur Verbindung des Antriebsgliedes (11) mit dem Koppelglied (32) unter Last der Abstand (a) zwischen den an dem Antriebsglied (11) und dem drehbar abgestützten Bauteil (22) vorgesehenen Oberflächen der Verzahnungen (18, 26) größer bemessen ist als die axiale Breite (b) des Koppelgliedes (32).

8. Vorrichtung nach Anspruch 6 oder 7,
**dadurch gekennzeichnet,**
**dass** das Koppelglied (32) und das Antriebsglied (11) bei Schaltvorgängen mit gleichen oder unterschiedlichen Drehzahlen antreibbar sind

9. Vorrichtung nach einem der Ansprüche 6 bis 8,
**dadurch gekennzeichnet,**
**dass** eine oder beide der an dem drehbar abgestützten Bauteil (22) und an dem Koppelglied (32) vorgesehenen Verzahnungen (26) auf den Oberflächen mit einem verschleißfesten Reibbelag (26"), einer Beschichtung oder einer Rändelung versehen sind.

10. Vorrichtung nach einem der Ansprüche 6 bis 9,
**dadurch gekennzeichnet,**
**dass** die an dem Koppelglied (32) und dem Antriebsglied (11) vorgesehenen zusammenwirkenden Verzahnungen (33 bzw. 18) als Trapezverzahnungen und die an dem Koppelglied (32) und dem drehbar abgestützten Bauteil (22) vorgesehenen Verzahnungen (34 bzw. 26) als Spitzverzahnungen ausgebildet sind.

11. Vorrichtung nach einem der Ansprüche 6 bis 10,
**dadurch gekennzeichnet,**
**dass** bei zur wechselseitigen Verbindung des Koppelgliedes (32) mit dem drehbar abgestützten Bauteil (22) und dem Antriebsglied (11) vorgesehene Verzahnungen die zusammenwirkenden Verzahnungen (33 bzw. 18) des Koppelgliedes (32) und des Antriebsgliedes (11) eine höhere Zahntiefe aufweisen als die an dem drehbar abgestützten Bauteil (22) und dem Koppelglied (32) vorgesehenen zusammenwirkenden Verzahnungen (34 bzw. 26).

12. Vorrichtung nach einem oder mehrerer der Ansprüche 1 bis 11,
**dadurch gekennzeichnet,**
**dass** das Koppelglied (32; 62; 82; 112) als Schiebemuffe (32') ausgebildet und über einen oder mehrere Stehbolzen (38; 70; 90; 120) drehfest mit dem drehbar abgestützten Bauteil (22; 66; 88; 118) verbunden ist, auf denen das Koppelglied (32; 68; 82; 112) axial verschiebbar gelagert ist.

13. Vorrichtung nach einem oder mehreren der Ansprüche 1 bis 12,
**dadurch gekennzeichnet,**
**dass** das Koppelglied (254) über ständig ineinander greifende Verzahnungen (256, 263) oder einen oder mehrere Stehbolzen (281), die verschiebbar in dem Antriebsglied (261) eingesetzt sind, drehfest mit dem Antriebsglied (261) verbunden ist.

14. Vorrichtung nach einem oder mehrerer der Ansprüche 1 bis 13,
**dadurch gekennzeichnet,**
**dass** zur axialen Verstellung des Koppelgliedes (32) eine Servereinrichtung (41) in Form eines in einen Zylinder (42) eingesetzten, ein- oder beidseitig vom Druckmittel gesteuert beaufschlagbaren und auf das Koppelglied (32) einwirkenden Verstellkolbens (43) oder eine elektrisch wirksame Servoeinrichtung vorgesehen ist.

15. Vorrichtung nach Anspruch 14,
**dadurch gekennzeichnet,**
**dass** bei einer kraftschlüssigen Verbindung des Antriebsgliedes (65) mit dem Koppelglied (62) das auf das Koppelglied (62) einwirkende Verstellglied (74) der Servereinrichtung (73) mit einem in diesem drehbar abgestützten Einsatzstück (75) versehen ist.

16. Vorrichtung nach einem oder mehreren der Ansprüche 6 bis 15,
**dadurch gekennzeichnet,**
**dass** zur axialen Verstellung des Koppelgliedes (82; 112) ein ortsfest angeordneter Elektromagnet (13; 123) vorgesehen ist, mittels dem das Koppelglied (82; 112) gesteuert entgegen der Kraft von Rückstellfedern (92; 122) verstellbar ist.

17. Vorrichtung nach einem oder mehrerer der Ansprüche 1 bis 16,
**dadurch gekennzeichnet,**
**dass** in das Koppelglied (32; 62; 82; 112) eine oder mehrere Federn (40; 72; 92; 122) eingesetzt sind, die in Richtung des mit dem Koppelgliedes (32; 62; 82; 112) drehfest verbundenen Bauteils (69; 87; 117) wirksam sind.

18. Vorrichtung nach Anspruch 17,
**dadurch gekennzeichnet,**
**dass** die Federn (40; 72; 92; 122) jeweils auf einem Druckstück (39; 71; 91; 121) angeordnet sind, die mit einem der Bauteile vorzugsweise dem drehbar angeordneten Bauteil (22; 66; 88; 118) fest verbunden und an dessen freien Enden die Federn (40; 72; 92; 122) abgestützt sind.

19. Vorrichtung nach einem oder mehrerer der Ansprüche 1 bis 18,
**dadurch gekennzeichnet,**
**dass** zur Bestimmung der axialen Lage des Koppelgliedes (204; 32) ein oder mehrerer vorzugsweise berührungslos wirksame Signalgeber (213, 213'; 49; 49'), die durch das Koppelglied (204; 32) mittels Schaltnocken (212, 212'; 48; 48') oder dergleichen unmittelbar oder über Zwischenglieder beeinflussbar sind, oder eine Wegmesseinrichtung (103 oder 105) vorgesehen sind, deren Signale einer Steuereinrichtung (217; 51) oder dem Antriebsglied (261) bzw. einen mit diesem verbundenen Antriebsmotor (12) zuführbar sind.
